# FASCICULE DE BREVET EUROPEEN

(11) **EP 4 188 719 B1**
(45) Date de publication et mention de la délivrance du brevet: **20.03.2024**
(21) Numéro de dépôt: 21734419.1
(22) Date de dépôt: 31.05.2021
(51) Int. Cl.: B60B 3/10

(54) **ENSEMBLE CONSTITUE D'UN VOILE DE ROUE ET D'AU MOINS UN INSERT COMPORTANT DES MOYENS DE RETENU CONTRE LES GRAVILLONS**
ANORDNUNG AUS EINER RADSCHEIBE UND MINDESTENS EINEM EINSATZ MIT RÜCKHALTEMITTELN GEGEN SAND
ASSEMBLY CONSISTING OF A WHEEL DISC AND AT LEAST ONE INSERT COMPRISING RETAINING MEANS AGAINST GRIT

(30) Priorité: 30.07.2020 FR 2008066
(43) Date de publication de la demande: 07.06.2023
(73) Titulaire: Stellantis Auto SAS, 78300 Poissy (FR)
(72) Inventeur: PALPACUER, Eric, 75013 PARIS (FR); LAMOULIE, Didier, 28300 MAINVILLIERS (FR); GILBERT, Vincent, 92310 SEVRES (FR)
(86) Numéro de dépôt international: PCT/FR2021/050980
(87) Numéro de publication internationale: WO 2022/023628

(56) Documents cités:
- DE-A1-102013 222 044
- DE-A1-102018 203 796
- FR-A1- 3 080 062

## Description

La présente invention revendique la priorité de la demande française N°2008066 déposée le 30.07.2020.

La présente invention concerne un ensemble constitué d'un voile de roue et d'au moins un insert.

Le document DE 10 2013 222044 A1 montre un ensemble constitué d'un voile de roue et d'au moins un insert.

La présente invention concerne plus particulièrement un tel ensemble où le voile comporte au moins une ouverture, ladite ouverture étant au moins partiellement recouverte par l'insert, ledit insert comportant au moins une partie de recouvrement qui se prolonge de ladite ouverture en recouvrant une partie de recouvrement du voile, au moins un espacement étant présent entre lesdites parties de recouvrement de l'insert et du voile permettant le passage de gravillons depuis ladite ouverture vers lesdites parties de recouvrement.

De tels gravillons finissent par apparaitre à la surface du voile de la roue et sont difficile à retirer sans risquer d'abimer le voile de la roue ou l'insert.

De même, durant le cheminement du gravillon le long des parties de recouvrement de l'insert et du voile, celui-ci va abimer la surface du voile et de l'insert, risquant de créer des points de corrosion.

Le dispositif selon l'invention permet de remédier à cet inconvénient.

Il comporte en effet selon une première caractéristique, un ensemble constitué d'un voile de roue et d'au moins un insert, le voile comportant au moins une ouverture qui est au moins partiellement recouverte par l'insert de sorte, avec l'insert qui comporte au moins une partie de recouvrement qui se prolonge de ladite ouverture en recouvrant une partie de recouvrement du voile, au moins un espacement étant présent entre lesdites parties de recouvrement de l'insert et du voile, tel que le long desdites parties de recouvrement de l'insert et du voile, sont interposés des moyens de retenu, les moyens de retenu étant positionnés et dimensionnés de sorte à fermer au moins en partie l'accès de gravillons depuis ladite ouverture vers lesdites parties de recouvrement.

Selon une deuxième caractéristique de l'invention, les moyens de retenu sont solidaires de l'insert et sont positionnés en bordure de l'ouverture.

Selon une troisième caractéristique de l'invention, les moyens de retenu sont formés par au moins une ou par une succession de parois lignées parallèlement entre elles et venant de matières avec l'insert et se prolongeant dudit insert vers le voile.

Selon un second mode de réalisation de l'invention, les moyens de retenu sont formés par un joint souple qui se prolonge de l'insert contre le voile.

Selon une quatrième caractéristique de l'invention, le voile comporte plusieurs ouvertures, chaque ouverture étant au moins partiellement recouverte par un insert, chaque insert et chaque ouverture correspondante comportant un desdits moyens de retenu.

Selon une cinquième caractéristique de l'invention, un unique insert peut recouvrir plusieurs ouvertures formées dans le voile.

La présente invention concerne aussi une roue qui comporte au moins un voile et au moins un insert formant un ensemble qui comporte au moins une des caractéristiques précédentes.

La présente invention concerne enfin un véhicule qui comporte au moins une telle roue.

Les dessins annexés illustrent l'invention :
[Fig.1] représente une vue de face d'un ensemble constitué d'un voile de roue et d'un insert.
[Fig.2] représente en coupe, un premier mode de réalisation de l'insert de roue qui comporte des moyens de retenu contre les gravillons selon l'invention.
[Fig.3] représente en coupe, un deuxième mode de réalisation de l'insert de roue qui comporte des moyens de retenu contre les gravillons selon l'invention.
[Fig.4] représente en coupe, un troisième mode de réalisation de l'insert de roue qui comporte des moyens de retenu contre les gravillons selon l'invention.

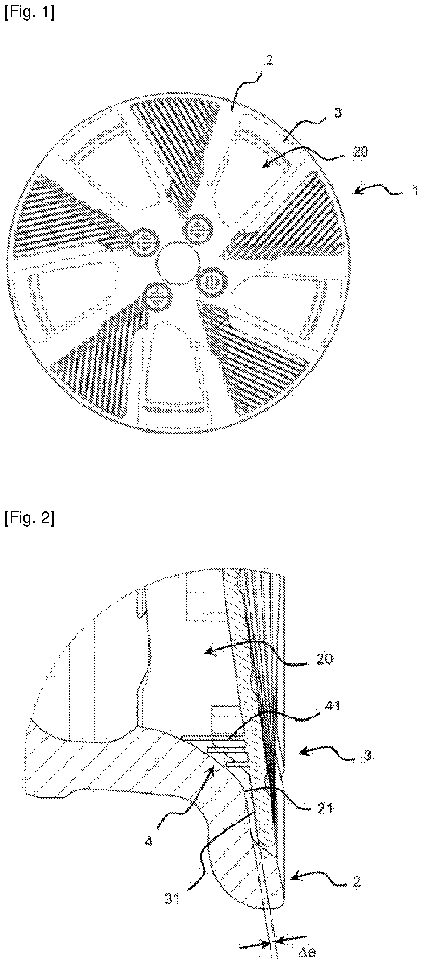

En référence aux figures 1 et 2, est représenté une roue 1 d'un véhicule qui comporte un voile 2 et un insert 3.

Le voile 2 comporte des ouvertures 20 qui sont au moins partiellement recouvertes par l'insert 3.

Dans le mode de réalisation tel que représenté, la roue 1 comporte un unique insert 3 qui recouvre une grande partie du voile 2, mais il est aussi possible d'avoir un insert par ouverture ce qui correspondrait ici à cinq inserts.

L'insert 3 comporte des parties de recouvrement 31 qui se prolonge de chaque ouverture 20 en recouvrant une partie de recouvrement 21 du voile 2, au moins un espacement Δe est toujours présent entre la partie de recouvrement 31 de l'insert 3 et la partie de recouvrement 21 du voile 2.

Dans la figure 2 est représenté une vue en coupe d'une partie de recouvrement 21 du voile 2 et d'une partie de recouvrement 31 de l'insert 3 pour une des ouvertures 20 du voile 2, sachant qu'un tel montage se retrouve à l'identique à l'emplacement des autres ouvertures 20.

Le long des parties de recouvrement 21 de l'insert 2 et des parties de recouvrement 31 du voile 3 sont interposés des moyens de retenu 4 qui sont positionnés et dimensionnés de sorte à fermer au moins en partie l'accès à des gravillons qui transitent depuis chaque ouverture 20.

Les moyens de retenu 4 sont formées par une série de trois parois 41 parallèles qui s'étendent de l'insert 3 en direction du voile 2.

Les moyens de retenu 4 sont positionnées en bordure de l'ouverture 20 sur une longueur correspondant à la largeur de l'ouverture 20.

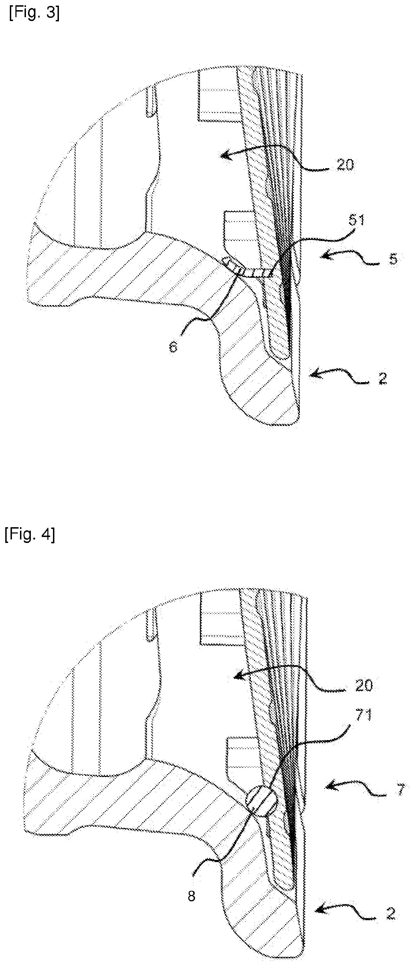

Sur la figure 3 est représenté une vue en coupe d'un insert 5 comportant des moyens de retenu 6 selon un deuxième mode de réalisation de l'invention.

Dans ce deuxième mode de réalisation, les moyens de retenu 6 sont formés par une lèvre souple en caoutchouc qui est solidarisée dans une gorge 51 formée dans l'insert 5.

Comme pour le premier mode de réalisation, les moyens de retenu 6 sont positionnées en bordure de l'ouverture 20 sur une longueur correspondant à la largeur de l'ouverture 20.

Du fait de la souplesse d'une telle lèvre, les moyens de retenu 6 présentent une hauteur supérieure à la hauteur nécessaire pour fermer l'accès à des gravillons qui transitent depuis chaque ouverture 20.

Sur la figure 4 est représenté une vue en coupe d'un insert 7 comportant des moyens de retenu 8 selon un troisième mode de réalisation de l'invention.

Dans ce troisième mode de réalisation, les moyens de retenu 8 sont formés par un joint cylindrique souple en caoutchouc qui est solidarisée dans une gorge 71 formée dans l'insert 7.

Comme pour le premier et le deuxième mode de réalisation, les moyens de retenu 8 sont positionnées en bordure de l'ouverture 20 sur une longueur correspondant à la largeur de l'ouverture 20.

## Revendications

1. Ensemble constitué d'un voile (2) de roue et d'au moins un insert (3, 5, 7), le voile (2) comportant au moins une ouverture (20), ladite ouverture (20) étant au moins partiellement recouverte par l'insert (3, 5, 7), ledit insert (3, 5, 7) comportant au moins une partie de recouvrement (31) qui se prolonge de ladite ouverture (20) en recouvrant une partie de recouvrement (21) du voile (2), au moins un espacement (Δe) étant présent entre lesdites parties de recouvrement (31, 21) de l'insert (3, 5, 7) et du voile (2), **caractérisé en ce que** le long desdites parties de recouvrement (31, 21) de l'insert (3, 5, 7) et du voile (2) sont interposés des moyens de retenu (4, 6, 8), les moyens de retenu (4, 6, 8) étant positionnés et dimensionnés de sorte à fermer au moins en partie l'accès de gravillons depuis ladite ouverture (20) vers lesdites parties de recouvrement (21, 31).

2. Ensemble selon la revendication 1, **caractérisé en ce que** les moyens de retenu (4, 6, 8) sont solidaires de l'insert (3, 5, 7).

3. Ensemble selon la revendication 1 ou 2, **caractérisé en ce que** les moyens de retenu (4, 6, 8) sont positionnés en bordure de l'ouverture (20).

4. Ensemble selon l'une quelconque des revendications précédentes, **caractérisé en ce que** les moyens de retenu (6, 8) sont formés par un joint souple qui se prolonge de l'insert (5, 7) contre le voile (2).

5. Ensemble selon l'une quelconque des revendications 1 à 3, **caractérisé en ce que** les moyens de retenu (4) sont formés par au moins une paroi (41) venant de matières avec l'insert (3) et se prolongeant dudit insert (3) vers le voile (2).

6. Ensemble selon la revendication 5, **caractérisé en ce que** les moyens de retenu (4) sont formés par une successions de parois (41).

7. Ensemble selon la revendication 6, **caractérisé en ce que** les parois (41) dormant les moyens de retenu (4) sont lignées parallèlement entre elles.

8. Ensemble selon l'une quelconque des revendications précédentes, **caractérisé en ce que** le voile (2) comporte plusieurs ouvertures (20), chaque ouverture (20) étant au moins partiellement recouverte par un insert (3, 5, 7), chaque insert (3, 5, 7) et chaque ouverture (20) correspondante comportant un desdits moyens de retenu (4, 6, 8).

9. Roue (1) de véhicule comportant un voile (2) et au moins un insert (3, 5, 7) formant un ensemble selon l'une quelconque des revendications précédentes.

10. Véhicule comportant une roue (1) selon la revendication précédente.

## Patentansprüche

1. Anordnung, bestehend aus einem Radschleier (2) und mindestens einem Einsatz (3, 5, 7), wobei der Schleier (2) mindestens eine Öffnung (20) aufweist, wobei die Öffnung (20) mindestens teilweise durch den Einsatz (3, 5, 7) abgedeckt ist, wobei der Einsatz (3, 5, 7) mindestens einen Abdeckabschnitt (31) aufweist, der sich von der Öffnung (20) erstreckt, indem er einen Abdeckabschnitt (21) des Schleiers (2) abdeckt, wobei zwischen den Abdeckabschnitten (31, 21) mindestens ein Abstand (Δe) vorhanden ist Der Einsatz (3, 5, 7) und die Bahn (2), **dadurch gekennzeichnet, dass** entlang der Abdeckabschnitte (31, 21) des Einsatzes (3, 5, 7) und der Bahn (2) Haltemittel (4, 6, 8) zwischengeschaltet sind, wobei die Haltemittel (4, 6, 8) so angeordnet und dimensioniert sind, dass sie den Zugang von Splitt von der Öffnung (20) zu den Abdeckabschnitten (21, 31) zumindest teilweise schließen.

2. Anordnung nach Anspruch 1, **dadurch gekennzeichnet, dass** die Haltemittel (4, 6, 8) mit dem Einsatz (3, 5, 7) fest verbunden sind.

3. Anordnung nach Anspruch 1 oder 2, **dadurch gekennzeichnet, dass** die Haltemittel (4, 6, 8) am Rand der Öffnung (20) angeordnet sind.

4. Anordnung nach einem der vorhergehenden Ansprüche, **dadurch gekennzeichnet, dass** die Rückhaltemittel (6, 8) durch eine flexible Dichtung gebildet sind, die sich von dem Einsatz (5, 7) gegen die Bahn (2) erstreckt.

5. Anordnung nach einem der Ansprüche 1 bis 3, **dadurch gekennzeichnet, dass** die Rückhaltemittel (4) durch mindestens eine Wand (41) gebildet sind, die aus Materialien mit dem Einsatz (3) stammt und sich von dem Einsatz (3) zu der Bahn (2) hin erstreckt.

6. Anordnung nach Anspruch 5, **dadurch gekennzeichnet, dass** die Haltemittel (4) durch eine Folge von Wänden (41) gebildet sind.

7. Anordnung nach Anspruch 6, **dadurch gekennzeichnet, dass** die Wände (41), die die Haltemittel (4) bilden, parallel zueinander ausgerichtet sind.

8. Anordnung nach einem der vorhergehenden Ansprüche, **dadurch gekennzeichnet, dass** die Bahn (2) mehrere Öffnungen (20) aufweist, wobei jede Öffnung (20) zumindest teilweise von einem Einsatz (3, 5, 7) bedeckt ist, wobei jeder Einsatz (3, 5, 7) und jede entsprechende Öffnung (20) eine der Halteeinrichtungen (4, 6, 8) aufweist.

9. Fahrzeugrad (1), das ein Segel (2) und mindestens einen Einsatz (3, 5, 7) aufweist, der eine Anordnung nach einem der vorhergehenden Ansprüche bildet.

10. Fahrzeug mit einem Rad (1) nach dem vorhergehenden Anspruch.

## Claims

1. Assembly consisting of a wheel disk (2) and at least one insert (3, 5, 7), the disk (2) comprising at least one opening (20), said opening (20) being at least partially covered by the insert (3, 5, 7), said insert (3, 5, 7) comprising at least one covering part (31) which is extended from said opening (20) by covering a covering part (21) of the disk (2), at least one spacing (Δe) being present between said covering parts (31, 21) of the disk (3, 5, 7) and the web (2), **characterized in that** along said covering parts (31, 21) of the insert (3, 5, 7) and of the web (2) are interposed retaining means (4, 6, 8), the retaining means (4, 6, 8) being positioned and dimensioned so as to close at least in part the access of chips from said opening (20) to said covering parts (21, 31).

2. Assembly according to claim 1, **characterized in that** the retaining means (4, 6, 8) are integral with the insert (3, 5, 7).

3. Assembly according to claim 1 or 2, **characterized in that** the retaining means (4, 6, 8) are positioned at the edge of the opening (20).

4. Assembly according to any one of the preceding claims, **characterized in that** the retaining means (6, 8) are formed by a flexible seal which is extended by the insert (5, 7) against the web (2).

5. Assembly according to any one of claims 1 to 3, **characterized in that** the retaining means (4) are formed by at least one wall (41) coming from materials with the insert (3) and extending from the said insert (3) towards the web (2).

6. Assembly according to claim 5, **characterized in that** the retaining means (4) are formed by a succession of walls (41).

7. Assembly according to claim 6, **characterized in that** the walls (41) forming the retaining means (4) are aligned parallel to one another.

8. Assembly according to any one of the preceding claims, **characterized in that** the web (2) comprises several openings (20), each opening (20) being at least partially covered by an insert (3, 5, 7), each insert (3, 5, 7) and each corresponding opening (20) comprising one of said retaining means (4, 6, 8).

9. Vehicle wheel (1) comprising a web (2) and at least one insert (3, 5, 7) forming an assembly according to any one of the preceding claims.

10. Vehicle comprising a wheel (1) according to the preceding claim.
